# FASCICULE DE BREVET EUROPEEN

(11) **EP 3 861 195 B1**
(45) Date de publication et mention de la délivrance du brevet: **15.01.2025**
(21) Numéro de dépôt: 19835456.5
(22) Date de dépôt: 21.11.2019
(51) Int. Cl.: F02K 1/04, F02K 1/82, F01D 9/06, F01D 25/12, F01D 25/26, F01D 25/30

(54) **TURBORÉACTEUR À DOUBLE FLUX COMPRENANT UN CÔNE DE SORTIE REFROIDI PAR SON FLUX SECONDAIRE**
TURBOFANTRIEBWERK MIT EINEM DURCH SEINE SEKUNDÄRSTRÖMUNG GEKÜHLTEN AUSLASSKEGEL
TURBOFAN ENGINE COMPRISING AN OUTLET CONE COOLED BY ITS SECONDARY FLOW

(30) Priorité: 27.11.2018 FR 1871932
(43) Date de publication de la demande: 11.08.2021
(73) Titulaire: SAFRAN AIRCRAFT ENGINES, 75015 Paris (FR)
(72) Inventeur: BELMON, Guillaume, Claude, Robert, 77550 MOISSY-CRAMAYEL (FR); ZACCARDI, Cédric, 77550 MOISSY-CRAMAYEL (FR)
(74) Mandataire: Brevalex
(86) Numéro de dépôt international: PCT/FR2019/052777
(87) Numéro de publication internationale: WO 2020/109705

(56) Documents cités:
- EP-A1- 0 938 624
- EP-A1- 3 553 295
- CN-A- 104 819 016
- FR-A1- 2 824 598
- FR-A1- 2 897 655
- FR-A1- 3 062 678
- GB-A- 695 482

## Description

### DOMAINE TECHNIQUE

L'invention concerne un agencement de turboréacteur double flux comportant à son aval un cône de sortie renfermant des composants dont le refroidissement est optimisé.

### ÉTAT DE LA TECHNIQUE ANTÉRIEURE

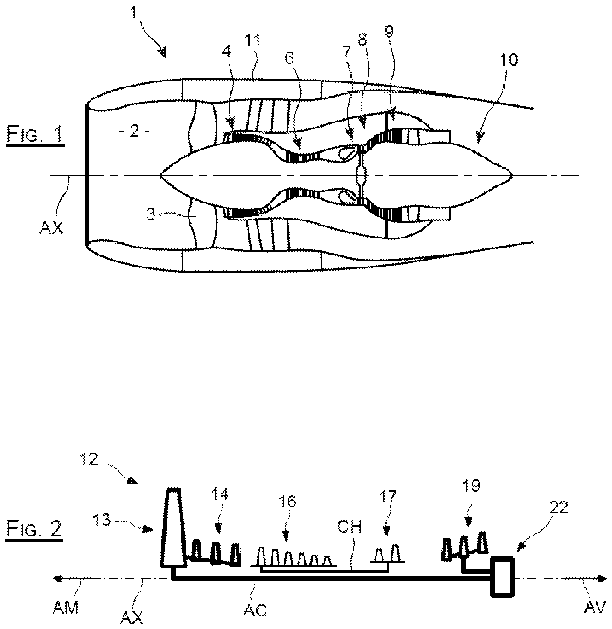

Dans un tel moteur 1 représenté sur la figure 1, l'air est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé dans des étages de compression 4 et 6 avant d'arriver dans une chambre de combustion 7, après quoi il est détendu à travers une turbine haute pression 8 et une turbine basse pression 9 avant d'être évacué vers l'arrière. Le flux secondaire est quant à lui propulsé directement vers l'arrière par la soufflante dans une veine délimitée par le carter 11.

Un tel moteur de type double-corps comporte un corps dit basse pression par lequel la soufflante 3 est couplée à la turbine basse pression 9, et un corps dit haute pression par lequel le compresseur haute pression 6 est couplé à la turbine haute pression 8, ces deux corps étant coaxiaux et indépendants l'un de l'autre en rotation.

En aval de la turbine basse pression 9, ce moteur est équipé d'un cône de sortie 10 pour limiter la formation de turbulences dans le flux primaire éjecté par la turbine basse pression 9. Un tel cône de sortie, également connu du document FR2824598 renferme usuellement des composants du moteur tels qu'un réducteur, une boîte à engrenages, une pompe hydraulique ou autre, qui génèrent de la chaleur et nécessitent par là-même d'être refroidis.

Le but de l'invention est d'apporter une solution pour optimiser le refroidissement des composants installés dans le cône de sortie d'un tel moteur.

### EXPOSÉ DE L'INVENTION

A cet effet, l'invention a pour objet un turboréacteur à double flux selon la revendication 1.

Avec cet agencement, les composants installés dans le cône de sortie sont refroidis avec de l'air frais, de sorte qu'il est possible d'installer dans ce cône des composants générant une puissance thermique plus importante et/ou en plus grand nombre.

L'invention concerne également un turboréacteur ainsi défini, dans lequel le cône de sortie comporte une paroi principale et une paroi de doublure interne qui longe la paroi principale en étant espacée de celle-ci pour délimiter avec cette paroi principale un espace inter-parois, et dans lequel une portion du flux de refroidissement traverse l'espace inter-parois avant d'être évacué par l'ouverture de sortie.

L'invention concerne également un turboréacteur ainsi défini, dans lequel le bras radial est terminé par une écope baignant dans le flux secondaire pour favoriser le prélèvement du flux de refroidissement.

L'invention concerne également un turboréacteur ainsi défini, dans lequel la sortie est formée par un prolongement cylindrique du cône.

L'invention concerne également un turboréacteur ainsi défini, dans lequel la sortie est formée par un prolongement cylindrique de la paroi principale et par un prolongement cylindrique de la paroi de doublure coaxiaux.

L'invention concerne également un turboréacteur ainsi défini, comprenant une turbine basse pression entraînant un arbre central par l'intermédiaire d'un réducteur planétaire ou épicycloïdal, et dans lequel ce réducteur situé dans l'espace interne.

L'invention concerne également un turboréacteur ainsi défini, comprenant un arbre central et un palier de maintien de cet arbre central qui est situé dans l'espace interne.

### BRÈVE DESCRIPTION DES DESSINS

La figure 1 est une vue en coupe longitudinale d'un turboréacteur double flux connu ;
La figure 2 est une vue générale schématique en coupe longitudinale d'une architecture de turboréacteur dans laquelle est mise en oeuvre l'invention ;
La figure 3 est une vue schématique en coupe longitudinale d'une portion aval d'architecture de turboréacteur dans laquelle est mise en oeuvre l'invention ;
La figure 4 est une représentation schématique en coupe longitudinale du refroidissement du cône de sortie selon l'invention.

### EXPOSÉ DÉTAILLÉ DE MODES DE RÉALISATION PARTICULIERS

Comme représenté schématiquement sur la figure 2, le moteur selon l'invention comprend une soufflante 13 à sa partie amont AM suivie d'un compresseur basse pression 14 qui sont entraînés par un arbre central AC, la soufflante étant traversée par l'ensemble du flux entrant dans ce moteur comprenant un flux primaire central FP et un flux secondaire FS entourant le flux primaire.

Comme on l'aura compris, les directions amont AM et aval AV sont définies par rapport au sens de circulation du flux dans le moteur le long de son axe longitudinal AX, conformément aux conventions usuelles. De manière analogue, les directions ou positions radiales interne et externe sont définies par rapport à un axe longitudinal AX central du moteur.

Dans ce moteur, un compresseur haute pression 16 situé immédiatement en aval AV du compresseur basse pression 14 comprime le fluide du flux primaire l'ayant traversé, avant admission dans une chambre de combustion non représentée située à son aval.

Après avoir traversé la chambre de combustion, le fluide est détendu dans une turbine haute pression 17 qui entraine le compresseur haute pression 16, ce compresseur 16 et la turbine 17 étant portés par un corps haute pression CH qui entoure l'arbre central AC en étant indépendant en rotation de celui-ci.

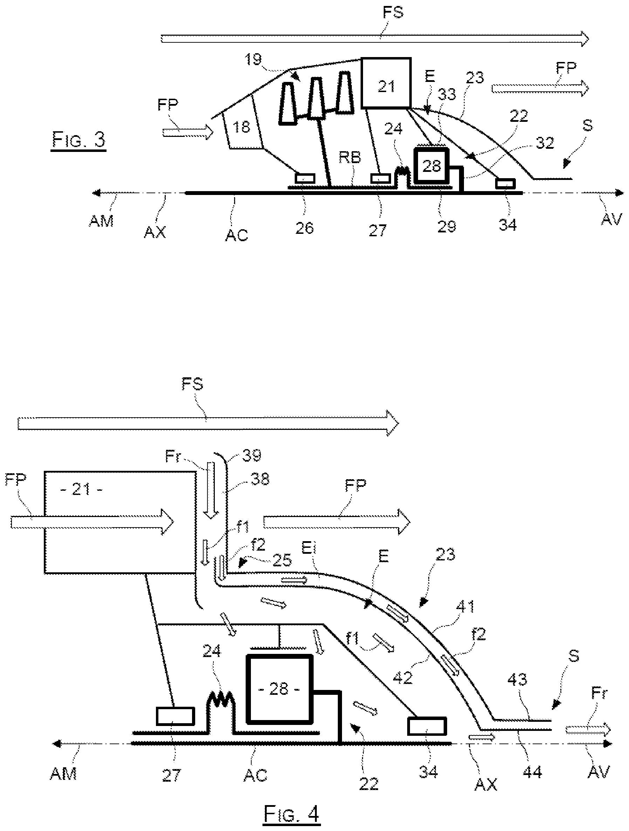

Après avoir traversé la turbine haute pression 17, le fluide transite dans un carter inter-turbines repéré par 18 sur la figure 3, avant de traverser une turbine basse pression 19, pour être ensuite évacué à travers un carter d'échappement 21. Cette turbine basse pression 19 est liée en rotation à l'arbre central par un réducteur épicycloïdal 22 situé à son aval AV, et grâce auquel elle tourne plus vite que la soufflante 13.

Comme visible sur la figure 3, le carter d'échappement 21 porte un cône de sortie 23 qui ferme la région aval du moteur située radialement à l'intérieur de la veine primaire c'est-à-dire la veine dans laquelle circule le flux primaire FP, ce cône de sortie 23 s'étendant vers l'aval depuis une extrémité amont 25 par laquelle il est porté par le carter 21.

Le réducteur 22 est situé à l'intérieur d'un espace interne E délimité par le cône de sortie 23 prolongeant ce carter 21, en étant relié à l'arbre central AC et à un rotor RB portant la turbine basse pression.

Ce rotor RB qui entoure l'arbre central AC s'étend depuis une partie médiane par laquelle il porte la turbine basse pression 19, jusqu'à une partie aval par laquelle il est accouplé au réducteur 22. Ce rotor RB comporte dans sa région centrale un élément radialement flexible 24 souple selon la direction radiale pour autoriser une excentration de la partie amont du rotor RB par rapport à sa partie aval en assurant une transmission de couple.

Le rotor basse pression RB est maintenu par un palier amont 26 situé en amont de la turbine basse pression 19 et par un palier aval 27 situé entre cette turbine basse pression 19 et l'élément flexible 24. Le palier amont de rotor 26 est porté par le carter inter-turbines 18, et le palier aval de rotor 27 est porté par le carter d'échappement 21. Au moins l'un des deux paliers de rotor 26 et 27 est un palier de butée, c'est-à-dire récupérant l'effort axial de poussée généré par la turbine basse pression pour le transférer à la structure du moteur.

Le réducteur 22 comporte des pignons satellites 28 entourant une couronne interne 29 et entourés par une couronne externe 33 en étant chacun engrené avec ces deux couronnes, ces pignons 28 étant portés par un porte satellite 32.

Le réducteur 22 est ici de type épicycloïdal, c'est-à-dire que le porte satellites 32 est mobile en rotation en étant porté l'arbre central AC. La couronne interne 29 est quant à elle rigidement solidaire du rotor basse pression RB alors que la couronne externe 33 est rigidement solidaire du carter d'échappement 21 en étant portée par celui-ci. Ce réducteur 22 pourrait aussi être un réducteur planétaire, dans lequel le porte satellite est porté par le carter d'échappement, la couronne externe étant alors portée par l'arbre central.

L'arbre central AC est porté par un palier amont non visible sur la figure 3 et situé en partie amont du moteur, et par un palier aval d'arbre central 34 situé en aval du réducteur 22, en étant porté par le carter d'échappement 21, ce palier aval 34 étant situé dans l'espace interne E du cône de sortie 23.

Dans cette architecture générale, le réducteur 22 ainsi que le palier aval 34 de l'arbre central qui sont installés dans l'espace E génèrent une chaleur importante. Pour limiter l'échauffement de ces composants, cette chaleur est dissipée grâce à la conception avantageuse du carter d'échappement 21 et du cône de sortie 23 qu'il porte.

Ainsi, comme visible sur la figure 4 au moins l'un des bras radiaux 38 du carter d'échappement 21, traversant la veine primaire dans laquelle circule le flux primaire FP, est creux. Ce bras radial 38 est aménagé pour acheminer de l'air frais provenant du flux secondaire FS qui circule dans la veine secondaire vers l'espace interne E.

Le flux de refroidissement, noté Fr, qui est prélevé dans la veine secondaire, chemine radialement dans le bras 38 vers l'espace interne E pour le ventiler de manière à dissiper la chaleur générée par les composants tels que le réducteur 22 et le palier d'arbre 34, le flux ventilant cet espace interne étant évacué par une sortie S à l'extrémité aval du cône 23. Cette sortie S est une ouverture formée à l'extrémité centrale du cône 23.

Pour favoriser le prélèvement du flux de refroidissement Fr dans le flux secondaire FS, le bras radial 38 est avantageusement terminé par une écope 39 qui dépasse radialement d'une face externe du carter d'échappement 21 dans la veine secondaire, cette écope 39 comportant une ouverture orientée vers l'amont AM pour collecter l'air acheminé par le bras radial vers l'espace interne E.

Pour améliorer le refroidissement, le cône 23 comporte une paroi principale externe 41 et une doublure interne 42, c'est-à-dire une autre paroi qui longe sa face interne tout en étant à faible distance de celle-ci, afin de délimiter un espace inter-parois Ei dans lequel circule une part du flux de refroidissement Fr. Comme visible sur la figure 4, la doublure interne 42 longe la face interne de la paroi principale 41 parallèlement à celle-ci et sur la majorité de sa surface.

Plus particulièrement, lorsque le flux de refroidissement Fr a parcouru le bras radial 38 et atteint le cône 23 il est scindé en un premier flux f1 orienté vers l'espace interne E pour le ventiler, et un deuxième flux f2 qui circule dans l'espace inter-parois Ei. Ces deux flux f1 et f2 se rejoignent au niveau de la sortie S lors de leur évacuation hors du cône 23.

La doublure interne 42 s'étend le long de l'essentiel de la face interne de la paroi principale 41, et le flux f2 est injecté au niveau de l'extrémité amont AM du cône 23 de manière à longer l'essentiel de la paroi principale 41 qui est exposée au flux primaire FP chaud, avant d'être évacué par la sortie S. Cette circulation permet de limiter voire d'annuler l'échauffement des composants situés dans l'espace interne E par le flux primaire FP sortant du carter d'échappement, qui tend à réchauffer par convection et par rayonnement la paroi principale 41.

Dans l'exemple de la figure 4, la sortie S est formée par un prolongement cylindrique 43 de la paroi principale 41, qui s'étend à l'extrémité aval AV du cône 23. La paroi de doublure 42 est elle aussi terminée par un prolongement cylindrique 44 de plus faible diamètre qui s'étend à l'intérieur du prolongement cylindrique 43. Cet agencement assure que les évacuations des flux f1 et f2 ne se perturbent pas mutuellement.

Dans l'exemple des figures, le système de refroidissement de l'espace interne E est destiné à évacuer la chaleur générée par le palier aval 34 et/ou par le réducteur 22, mais il peut être adapté pour optimiser le refroidissement de tout autre type de composant installé dans cet espace interne.

## Revendications

1. Turboréacteur à double flux comportant un carter d'échappement (21) traversé par un flux primaire (FP) et entouré par un flux secondaire (FS) circulant tous deux d'amont (AM) en aval (AV) du turboréacteur en service, et un cône de sortie (23) ayant une extrémité amont (25) portée par ce carter d'échappement (21), le cône de sortie (23) délimitant un espace interne (E), dans lequel le carter d'échappement (21) comporte un bras radial (38) creux traversant le flux primaire (FP) qui achemine une part du flux secondaire (FS) afin de former un flux de refroidissement (Fr) pour refroidir un ou des composants situés dans l'espace interne (E), dans lequel le cône de sortie (23) est terminé par une ouverture (S) d'évacuation du flux de refroidissement (Fr) **caractérisé en ce que** le cône de sortie (23) comporte une paroi principale (41) et une paroi de doublure interne (42) qui longe la paroi principale (41) parallèlement à celle-ci sur la majorité de sa surface en étant espacée de celle-ci pour délimiter avec cette paroi principale (41) un espace inter-parois (Ei), et dans lequel une portion du flux de refroidissement (Fr) traverse l'espace inter-parois (Ei) avant d'être évacué par l'ouverture de sortie (S), et dans lequel la paroi de doublure interne (42) comporte une extrémité amont qui s'étend radialement à l'intérieur du bras radial (38) pour collecter la portion du flux de refroidissement (Fr) traversant l'espace inter-parois (Ei).

2. Turboréacteur selon la revendication 1, dans lequel le bras radial (38) est terminé par une écope baignant dans le flux secondaire (FS) pour favoriser le prélèvement du flux de refroidissement (Fr).

3. Turboréacteur selon l'une des revendications précédentes, dans lequel la sortie (S) est formée par un prolongement cylindrique du cône (23).

4. Turboréacteur selon la revendication 1, dans lequel la sortie (S) est formée par un prolongement cylindrique (43) de la paroi principale (41) et par un prolongement cylindrique (44) de la paroi de doublure (42) qui s'étend à l'intérieur du prolongement cylindrique (43) de la paroi principale (41).

5. Turboréacteur selon l'une des revendications précédentes, comprenant une turbine basse pression (19) entraînant un arbre central (AC) par l'intermédiaire d'un réducteur planétaire ou épicycloïdal (22), et dans lequel ce réducteur (22) situé dans l'espace interne (E).

6. Turboréacteur selon l'une des revendications précédentes, comprenant un arbre central (AC) et un palier (34) de maintien de cet arbre central (AC) qui est situé dans l'espace interne (E).

## Patentansprüche

1. Zweistrom-Triebwerk, das ein Abgasgehäuse (21), durch das ein Primärstrom (FP) strömt und das von einem Sekundärstrom (FS) umgeben ist, die beide von stromaufwärts (AM) nach stromabwärts (AV) des Triebwerks während des Betriebs zirkulieren, und einen Auslasskegel (23) umfasst, der ein stromaufwärtiges Ende (25) aufweist, das von dem Abgasgehäuse (21) getragen wird, wobei der Auslasskegel (23) einen Innenraum (E) begrenzt, wobei das Abgasgehäuse (21) einen hohlen radialen Arm (38) umfasst, der durch den Primärstrom (FP) verläuft, der einen Teil des Sekundärstroms (FS) befördert, um einen Kühlstrom (Fr) zu bilden, um eine oder mehrere Komponenten abzukühlen, die sich im Innenraum (E) befindlichen, wobei der Auslasskegel (23) in einer Öffnung (S) zum Abführen des Kühlstroms (Fr) mündet, **dadurch gekennzeichnet, dass** der Auslasskegel (23) eine Hauptwand (41) und eine innere Auskleidungswand (42) umfasst, die entlang der Hauptwand (41) parallel zu dieser über den größten Teil ihrer Fläche folgt und von dieser beabstandet ist, um mit der Hauptwand (41) einen Zwischenwandraum (Ei) zu begrenzen, und wobei ein Teil des Kühlstroms (Fr) durch den Zwischenwandraum (Ei) strömt, bevor er durch die Auslassöffnung (S) abgeführt wird, und wobei die innere Auskleidungswand (42) ein stromaufwärtiges Ende umfasst, das sich radial im Inneren des radialen Arms (38) erstreckt, um den Teil des Kühlstroms (Fr) zu sammeln, der durch den Zwischenraum (Ei) strömt.

2. Triebwerk nach Anspruch 1, wobei der radiale Arm (38) in einer Schaufel mündet, die sich im Sekundärstrom (FS) befindet, um das Abziehen des Kühlstroms (Fr) zu erleichtern.

3. Triebwerk nach einem der vorhergehenden Ansprüche, wobei der Auslass (S) durch eine zylindrische Verlängerung des Kegels (23) gebildet wird.

4. Triebwerk nach Anspruch 1, wobei der Auslass (S) durch eine zylindrische Verlängerung (43) der Hauptwand (41) und durch eine zylindrische Verlängerung (44) der Auskleidungswand (42), die sich im Inneren der zylindrischen Verlängerung (43) der Hauptwand (41) erstreckt, gebildet wird.

5. Triebwerk nach einem der vorhergehenden Ansprüche, das eine Niederdruck-Turbine (19) umfasst, die über ein Planeten- oder Umlaufrädergetriebe (22) eine zentrale Welle (AC) antreibt, und wobei sich das Getriebe (22) im Innenraum (E) befindet.

6. Triebwerk nach einem der vorhergehenden Ansprüche, das eine zentrale Welle (AC) und ein Lager (34) zum Halten der zentralen Welle (AC), das sich im Innenraum (E) befindet, umfasst.

## Claims

1. A turbofan engine including an exhaust casing (21) through which passes a primary flow (FP) and surrounded by a secondary flow (FS) both circulating from upstream (AM) to downstream (AV) of the turbofan engine during operation, and an outlet cone (23) having an upstream end (25) carried by this exhaust casing (21), the outlet cone (23) delimiting an inner space (E), wherein the exhaust casing (21) includes a hollow radial arm (38) crossing the primary flow (FP) which conveys part of the secondary flow (FS) in order to form a cooling flow (Fr) to cool down one or several component(s) located in the inner space (E), and wherein the outlet cone (23) terminates in an opening (S) for discharging the cooling flow (Fr) **characterized in that** the outlet cone (23) includes a main wall (41) and an inner lining wall (42) which running parallel to the main wall (41) over most of its surface area while being spaced therefrom so as to delimit, together with this main wall (41), an inter-wall space (Ei), and wherein a portion of the cooling flow (Fr) passes through the inter-wall space (Ei) before being discharged by the outlet opening (S), and wherein the inner lining wall (42) comprises an upstream end that extends radially into the hollow radial arm (38) to collect the portion of the cooling flow (Fr) that passes through the inter-wall space (Ei).

2. The turbofan engine according to claim 1, wherein the radial arm (38) terminates in a scoop soaking in the secondary flow (FS) to promote sampling of the cooling flow (Fr).

3. The turbofan engine according to one of the preceding claims, wherein the outlet (S) is formed by a cylindrical extension of the cone (23).

4. The turbofan engine according to claim 1, wherein the outlet (S) is formed by a cylindrical extension (43) of the main wall (41) and by a cylindrical extension (44) of the lining wall (42) which extends inside the cylindrical extension (43) of the main all (41).

5. The turbofan engine according to one of the preceding claims, comprising a low-pressure turbine (19) driving a central shaft (AC) via a planetary or epicyclic reduction gear (22), and wherein this reduction gear (22) is located in the inner space (E).

6. The turbofan engine according to one of the preceding claims, comprising a central shaft (AC) and a bearing (34) for holding this central shaft (AC) which is located in the inner space (E).
